# EUROPEAN PATENT SPECIFICATION

(11) **EP 1 950 083 B1**
(45) Date of publication and mention of the grant of the patent: **19.05.2010**
(21) Application number: 08250337.6
(22) Date of filing: 29.01.2008
(51) Int. Cl.: B60N 2/48

(54) **Seating arrangement**
Sitzanordnung
Agencement d'assise

(30) Priority: 29.01.2007 GB 0701663
(43) Date of publication of application: 30.07.2008
(73) Proprietor: Creactive Design Limited, Leamington Spa CV31 1HP (GB)
(72) Inventor: McBrien, Roderick Julian c/o Creactive Design, Leamington Spa CV31 1HP (GB); Hall, David Thomas Patrick c/o Creactive Design, Leamington Spa CV31 1HP (GB)
(74) Representative: Gray, James

(56) References cited:
- EP-A- 1 426 232
- DE-A1-102004 047 164
- DE-A1-102004 051 872
- DE-A1-102005 002 280
- FR-A- 2 770 470
- FR-A- 2 819 225
- GB-A- 2 318 508
- US-A- 4 789 201
- US-A- 5 882 073

## Description

The invention relates to a seating arrangement. The invention finds particular, though not exclusive, application to vehicles, such as public service vehicles, preferably trains, for underground and surface railways, and buses, and including aircraft.

Seating on public service vehicles is generally subject to intensive use and, even though it is of hard-wearing material, it needs to be repaired or replaced from time-to-time. Such seating can also be damaged, either accidentally or by vandals, again requiring removal for repair or replacement. Furthermore, for security and safety, the seating as a whole and its various component parts needs to be securely fixed to the vehicle, and this can render access for removal difficult.

It is an object of the present invention to provide a kit of parts for, and an assembled, seating arrangement that facilitates removal for repair and/or replacement.

US 4789201 discloses a vehicle seat assembly which includes support frame having a plurality of elongated apertures or slots of predetermined width therein and a seat cover. The seat cover is attached to the support frame by separate trim attachment strips of extruded plastic which are sown to the seat cover.

According to a first aspect of the present invention there is provided a vehicle seating arrangement comprising a pivotable seat substrate having a unitary seat and a backrest, a resilient cushion pad and a resilient squab pad, a cushion frame having a covering and a squab frame having a covering, the frames being releasably securable to the seat substrate so as to retain the cushion and squab pads between the frames, frame coverings and the seat substrate, wherein the frames are in the form of hoops which fully surround the pads.

In a preferred embodiment the resilient pads are not connected to the seat substrate, frame or frame covering but are retained in slight compression between the covering and the seat substrate. In such an embodiment the covering is held taught over a resilient pad by the connection of the frame to the seat substrate.

Preferably, the covering extends over only one major surface of each frame, and is secured around the peripheral edge thereof.

The covering is advantageously formed of a hard-wearing material, and may alternatively be of polymeric rather than fabric material. Advantageously, this outer covering is of aesthetically-pleasing colour and design.

In one embodiment, each frame is provided with one part of a releasable fastener arrangement for cooperating with a complementary part associated with, and preferably secured to, the seat substrate on which the covered frame is to be mounted.

The fastener arrangement may comprise a male part associated with one of the frame and the seat base and a female part associated with the other. Preferably, the male part comprises a projection having an enlarged head that is push-fitted, for quick assembly, into a resilient receiving channel of the female part. Subsequently removal can conveniently be achieved by inserting a blade of a screwdriver, for example, and expanding the channel to allow the head of the projection to be withdrawn. However, it is envisaged that other fastener arrangements, for example comprising a nut and bolt, may be used, requiring the use of tools for fixing and releasing. In an alternative embodiment, finger release clips may be used. It will be understood that the type of fixing utilised will be of type which permits only the authorised disengagement and removal of the frame. To this end the fixing is preferably configured such that it access to a rear face or surface of the seat base is required in order to release the frame.

In an alternative embodiment, each frame may be provided with a location arrangement and a fastening arrangement. The location arrangement may comprise a formation which is cooperable with a corresponding formation of the substrate. For example, the frame may be provided with one or more projections which are receivable in corresponding recesses or apertures of the seat substrate. Alternatively, the frame may be provided with one or more slots into which may be received hooked projections of the seat substrate. In use, the location arrangement is shielded from both view and access by the frame covering and resilient pad.

The fastening arrangement may comprise a toothed or barbed projection of the frame which is received in a corresponding recess or aperture of the seat substrate. The tooth or barb of the projection is resiliently biased relative to the projection such that the projection is able to pass through the recess or aperture before deploying the tooth or barb to retain the frame to the seat substrate. The fastening arrangement is preferably configured such that it access to a rear face or surface of the seat substrate is required in order to release the frame

Preferably, the frame is generally rectilinear, but it is envisaged that it may depart from a generally planar configuration so as to conform with the curvature of a backrest and/or a seat of the seat base, as appropriate.

In accordance with a further aspect of the present invention, there is provided a kit of parts comprising a frame, preferably of metal, over which is fitted, preferably tautly, a covering, preferably of a fabric or textile material, suitable for use as part, preferably a replacement part, of a seating arrangement, with the covering providing an outer surface thereof.

Preferably, the covering extends over only one major surface of the frame, and is secured around the peripheral edge thereof.

The covering is advantageously formed of a hard-wearing material, and may alternatively be of polymeric rather than fabric material. Advantageously, this outer covering is of aesthetically-pleasing colour and design.

The frame is provided with one part of a releasable fastener arrangement for cooperating with a complementary part associated with, and preferably secured to, a seat base on which the covered frame is to be mounted.

The fastener arrangement may comprise a male part associated with one of the frame and the seat base and a female part associated with the other. Preferably, the male part comprises a projection having an enlarged head that is push-fitted, for quick assembly, into a resilient receiving channel of the female part. Subsequently removal can conveniently be achieved by inserting a blade of a screwdriver, for example, and expanding the channel to allow the head of the projection to be withdrawn. However, it is envisaged that other fastener arrangements, for example comprising a nut and bolt, may be used, requiring the use of tools for fixing and releasing. In an alternative embodiment, finger release clips may be used. It will be understood that the type of fixing utilised will be of type which permits only the authorised disengagement and removal of the frame. To this end the fixing is preferably configured such that it access to a rear face or surface of the seat base is required in order to release the frame.

Preferably, the frame is generally rectilinear, but it is envisaged that it may depart from a generally planar configuration so as to conform with the curvature of a backrest and/or a seat of the seat base, as appropriate.

The seat base comprises a unitary seat and backrest.

The combination of frame and covering may be used as, or as part of, a cushion and/or a squab of the seating arrangement, and a plurality of frames and coverings may be fitted to a single seat base. Conveniently, each cushion frame and covering and each squab frame and covering respectively of a multi-person seating arrangement are of the same size and shape.

The kit of parts may also comprise a resilient pad, for example a foam pad, to enhance the comfort for use as a cushion or squab, the pad being configured to fit within the frame and to be retained therein from one side by the frame covering.

It will be appreciated that with the resilient pad mounted within the frame and abutting the covering, it will be securely retained in place when the frame itself is mounted on the seat base.

In accordance with another aspect of the present invention, there is provided a seating arrangement comprising a seat base to which is releasably fitted at least one kit of parts, comprising frame, covering and fastener arrangement, and preferably a resilient pad, as described above.

Preferably, for security, the fastening of the frame to the seat base is effected on the surface of the seat base opposed to that to which is mounted. Access to the fastener arrangement may be obtained, for example, by tilting the seat base about an upper, or lower, axis, at the top of a backrest or at the bottom of a seat of the seat base, for example.

Thus, the present invention provides components for a seating arrangement, and an assembled seating arrangement, whereby parts thereof can be accessed and removed conveniently when necessary, whilst maintaining security in normal operation. In particular, the outer covering and/or the resilient pad may be separately replaced without having to replace other components of the seating arrangement.

Components for, and an assembled, seating arrangement, in accordance with the present invention, for use in an underground train, will now be described, by way of example, with reference to the accompanying drawings, in which:
Figure 1 shows an exploded perspective view of a two-place seating arrangement according to a first embodiment of the present invention;
Figure 2 shows the seating arrangement of Figure 1 when assembled;
Figure 3 shows a section in elevation along the line III-III of Figure 2;
Figure 4 shows a fastener of the seating arrangement;
Figures 5 and 6 show variations of the seating arrangement of Figure 2;
Figure 7 shows a partially exploded perspective view of a two-place seating arrangement according to a second embodiment of the present invention;
Figure 8 shows a side view of seating arrangement of figure 7; and
Figure 9 shows a partially exploded perspective view of a two-place seating arrangement according to a second embodiment of the present invention.

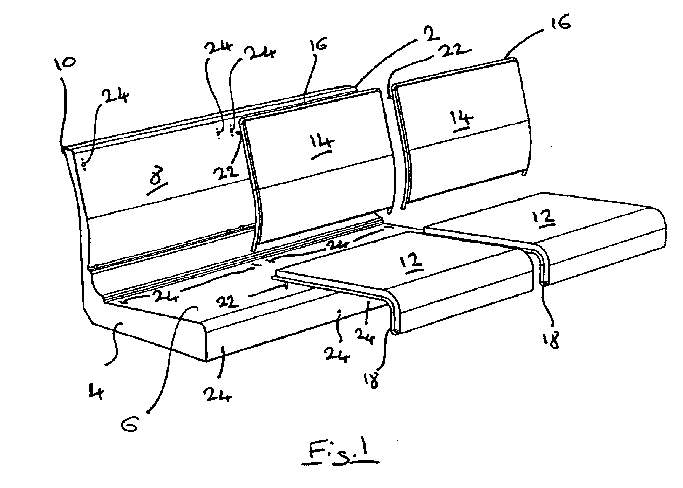

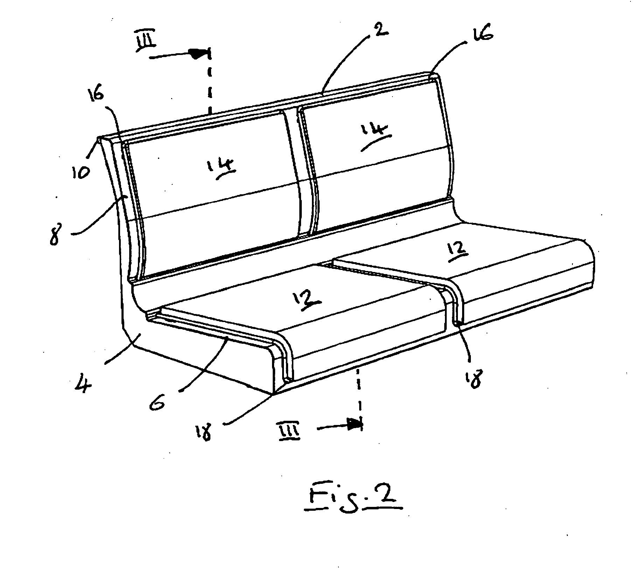

Referring to Figures 1 to 4, the seating arrangement has a rigid rolled sheet steel or extruded aluminium alloy seat base 2 with seating for two people, that is closed at each end by an end plate 4. The seat base 2 comprises a seat 6 and a backrest 8. A tube 10 extends across the top of the backrest 8 and allows for pivotal mounting of the seat base 2 to a fixed part of the train.

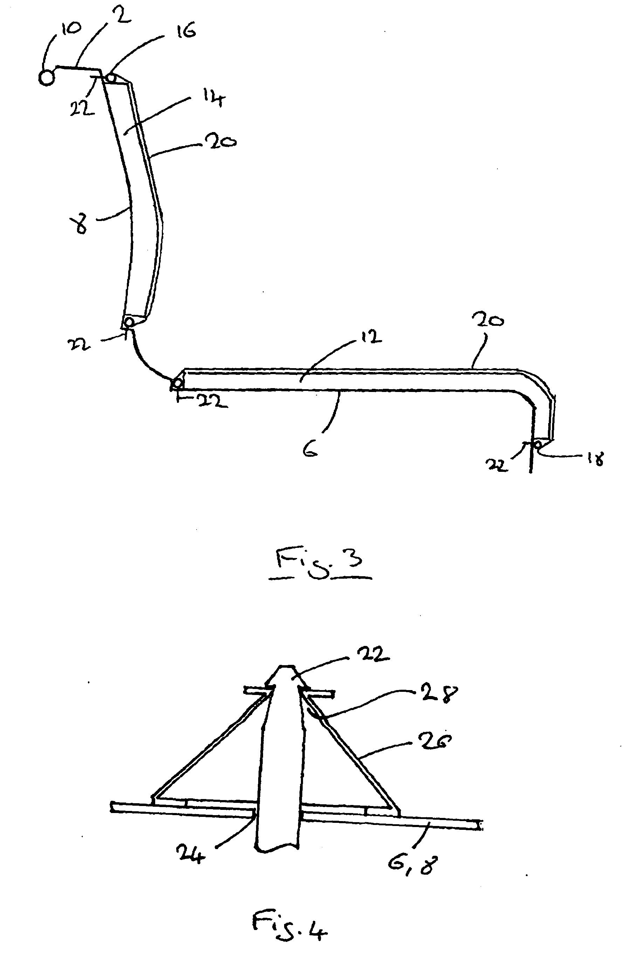

The seating arrangement is provided with a foam pad squab 14 and a foam pad cushion 12 for each place of the seat base 2. The seat base 2 is continuous such that it extends fully under both the squab 14 and cushion 12. The squabs 14 are of generally rectangular configuration and are fitted within respective metal squab frames 16, and the cushions 12 are fitted within respective metal cushion frames 18. As can be seen in Figure 3, though not shown in Figure 1, a hard-wearing fabric covering 20 is stretched tautly over each frame 16, 18, and is retained over the edges thereof to provide a suitably-patterned outer surface over the respective foam pads 12, 14. In the embodiments shown the frames 16,18 are in the form of hoops which fully surround the cushions 12 and squabs 14.

Each metal frame 16, 18 is provided with four projecting studs 22 that align with corresponding apertures 24 in the seat base 2. A quick release clip fastener 26 (Figure 4) is riveted to the back of the seat base 2 at least some of the apertures 24 thereof for securing the frames 16, 18 thereto. Other types of fastener may be used.

The resilient foam pads 12, 14, metal frames 16, 18 and covering 20 are assembled and fitted to the seat base as follows. Firstly, the fabric coverings 20 are secured tightly across the front of the respective frames 16 and 18. Then, corresponding foam pads 12 and 14 are placed within the frames from the back so as to abut the coverings 20 and to be retained laterally by the frames 16, 18. These components are then mounted and pressed against the backrest 8 and seat 6 respectively of the seat base 2, with the frame studs 22 passing through the seat base apertures 24, and engaging by means of their enlarged heads in channels 28 of the fasteners 26. As can be seen from Figure 3, for each frame 16 and 18, a pair of studs 22 engages horizontally and a pair of studs 22 engages vertically with the backrest 8 and seat 6 of the seat base 2 respectively.

It will be appreciated that access to the un-exposed surfaces of the seat 6 and backrest 8 may be achieved by rotating the entire seat base 2 upwardly about its pivot tube 10, whereby the frames 16 and 18 can be detached from the fasteners 26 by spreading apart the channels 28 and withdrawing the studs 22. With the seat base 2 in its operating orientation, access to the fasteners 26 is prevented so that removal of the covered frames 16 and 18 and the resilient pads 12 and 14 retained thereby is hindered during normal operation of the seating arrangement in the train.

In an alternative fastening arrangement, the fasteners 26 may not be attached to the reverse of the seat 6 or backrest 8, but with the seat base fitted, the fasteners 26 may be held manually against the apertures 24 while the seat frames 16 and 18 are pressed into position.

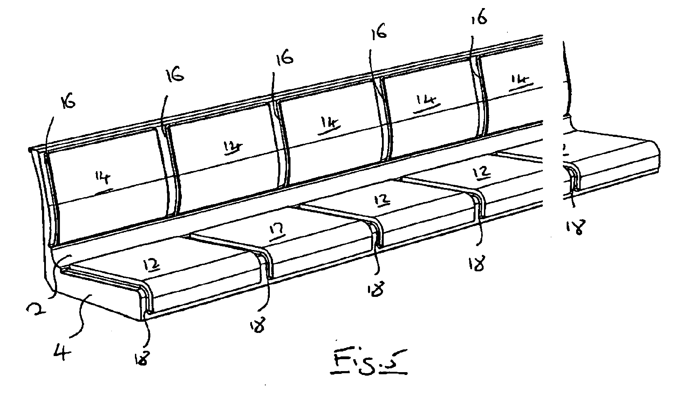

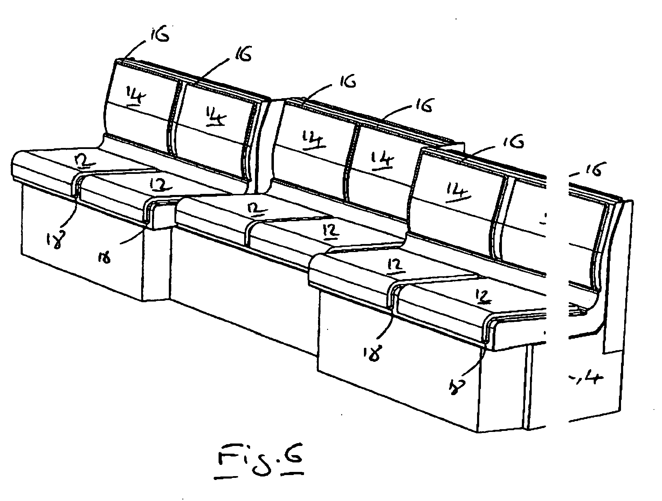

Although the invention has been described with respect to a two-place seating arrangement, it will be appreciated that it is equally applicable to a single-place seating arrangement, or a multiple-place seating arrangement as shown in the five-place arrangement in Figure 5, or as shown in the offset six-place seating arrangement of Figure 6.

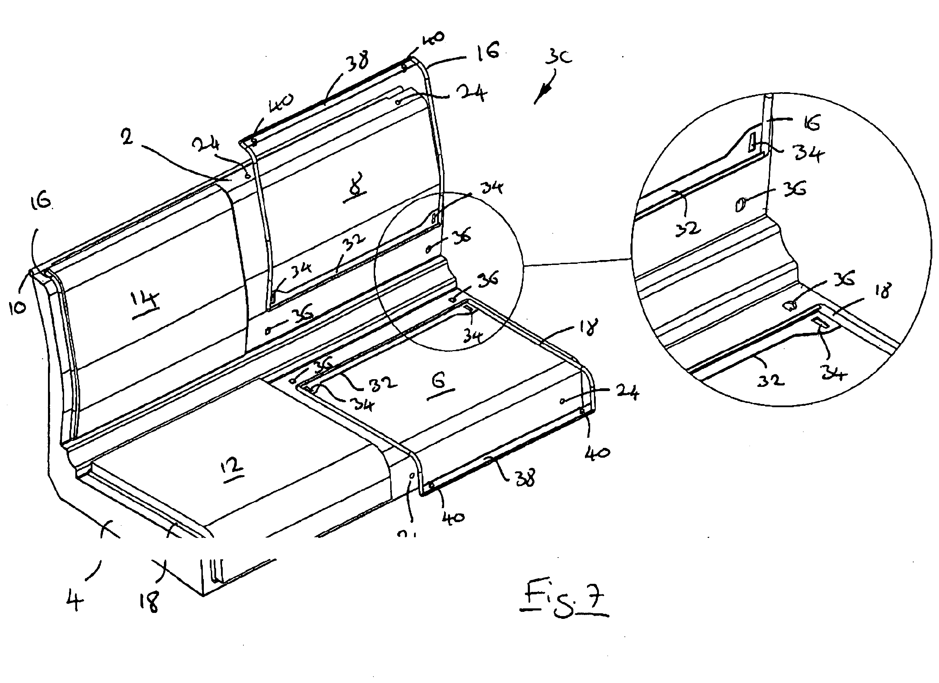

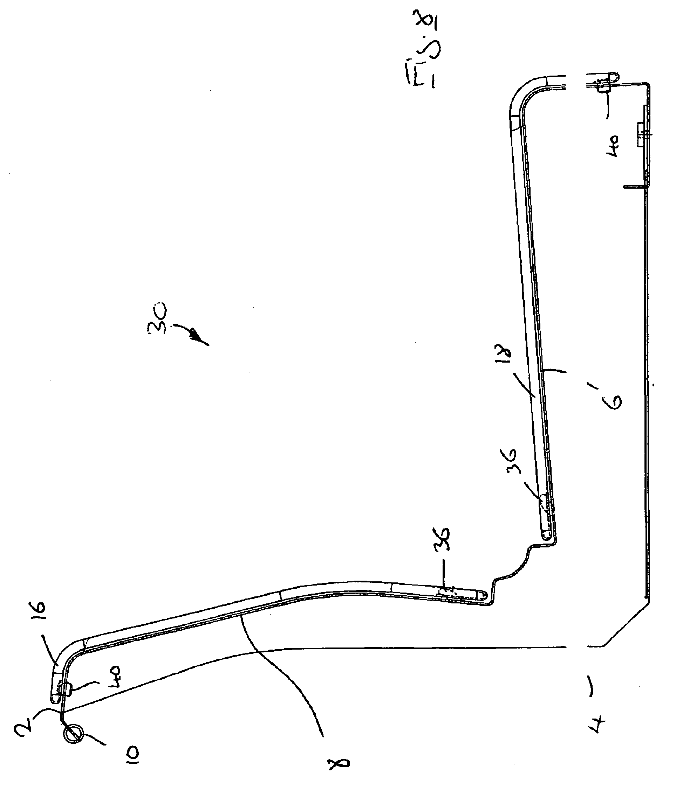

Referring now to figures 7 and 8 there is shown an alternative embodiment of a seating arrangement generally designated 30. Features common to the seating arrangement described with reference to figures 1 to 6 are identified with like reference numerals. For the sake of clarity the coverings 20 normally carried by the frames 16,18 have been omitted. The seating arrangement 30 of figures 7 and 8 differs in the manner in which the frames 16,18 are mountable to the seat base 2. Looking firstly at the cushion frame 18, this is provided with a plate 32 having a pair of spaced slots 34. The plate 32 is positioned along an edge of the frame 18. The spacing of the slots 34 corresponds with the spacing of a pair of hooks 36 provided on the seat portion 6 of the seat base 2. In use, the hooks 36 are able to pass through the slots 34 such that an edge of each slot 34 is retained by the respective hook 36. The cushion frame 18 is provided with a further plate 38 which is positioned along an edge of the frame 18 which is opposite to the edge having the slotted plate 32. The further plate 38 is provided with spaced projections 40 which align with apertures 24 of the seat base 2. Each projection 40 is provided with a sprung barb or tooth 42 which engages the inner surface 44 of the seat base 2 to retain the frame 18 to the seat base.

In order to fit the frame 18 to the seat base 2 the hooks 36 are first received in the slots 34, and then the projections 40 inserted into the apertures 24. The hooks 36 and slots 34 are shielded from view by both the cushion pad 12 and the covering (not shown) carried by the frame 18. The distal ends of the projections 40 are shielded by the seat base 2 and are accessible if the seat base 2 is pivoted about the tube 10 as described above. The squab frame 16 is of a similar configuration having a slotted plate 32 and a projection carrying plate 38.

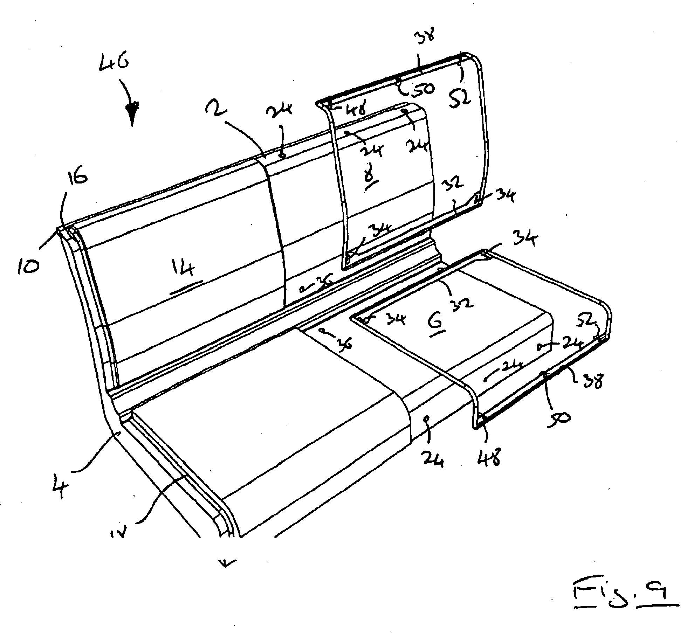

Figure 9 shows yet a further embodiment of the present invention generally designated 46 which is similar to the embodiment described with reference to figures 7 and 8. Features common to the embodiment described with reference to figures 7 and 8 are identified with like reference numerals. In the embodiment of figure 9 each frame 16,18 is provided with three spaced projections 48,50,52 which are receivable in corresponding apertures 24 of the seat base 2. The projections 48,50,52 comprise a central projection 50 having a sprung tooth or barb, and a pair of outer projections 48,50 which are not provided with a sprung tooth or barb. In use, the outer projections serve to locate the frame 16,18 with respect to the seat base 2 while the central projection 50 acts to secure the frame 16,18 to the seat base 2.

The aforementioned embodiments of the present invention describe seating arrangements having both a cushion portion and a squab portion. The figures further show arrangements of two or more seats. It will be appreciated that the invention may utilised in connection with a single seat having a cushion portion and a squab portion.

## Claims

1. A vehicle seating arrangement comprising a seat substrate (2) having a unitary seat (6) and a backrest (8), a resilient cushion pad (12) and a resilient squab pad (14), a cushion frame (18) having a covering (20) and a squab frame (16) having a covering (20), the frames (16,18) being releasably securable to the seat substrate (2) so as to retain the cushion and squab pads (12,14) between the frames (16,18), frame coverings (20) and the seat substrate (2), and wherein the frames (16,18) are in the form of hoops which fully surround the pads (12,14).

2. A vehicle seating arrangement as claimed in claim 1 wherein the resilient pads (12,14) are retained in slight compression between the covering (20) and the seat substrate (2).

3. A vehicle seating arrangement as claimed in claim 1 or claim 2 wherein the covering (20) is secured around the peripheral edge of each frame (16,18).

4. A vehicle seating arrangement as claimed in any preceding claim wherein each frame (16,18) is provided with one part of a releasable fastener arrangement for cooperating with a complementary part associated with the seat substrate (2).

5. A vehicle seating arrangement as claimed in claim 4 wherein the releasable fastening arrangement comprises a projection (40) of the frame (16,18) having a resilient barb (42) which projection is receivable in a corresponding aperture (24) of the seat substrate (2).

6. A vehicle seating arrangement as claimed in claim 4 or claim 5 wherein the releasable fastening arrangement in use is shielded from view and access by the frame covering (20) and resilient pad (12,14).

7. A vehicle seating arrangement as claimed in any preceding claim wherein each frame (16,18) is further provided with a location arrangement to locate the frame (16,18) relative to the seat substrate (2).

8. A vehicle seating arrangement as claimed in claim 7 wherein the location arrangement comprises a slot (34) of the frame (16,18) into which is receivable a hooked projection (36) of the seat substrate (2).

9. A vehicle seating arrangement as claimed in claim 7 or claim 8 wherein the location arrangement in use is shielded from both view and access by a frame covering (20) and resilient pad (12,14).

## Patentansprüche

1. Eine Sitzanordnung für ein Fahrzeug mit einer Sitzbasis (2), bestehen aus einer Sitzfläche (6) und einer Rückenlehne (8), die einstückigen mit einander verbunden sind, mit einer widerstandsfähigen Polsterung (12) für die Sitzfläche, einer widerstandsfähigen Polsterung (14) für die Rückenlehne und einem Polsterrahmen (18) für die Sitzfläche, mit einem Bezug (20) und einem Polsterrahmen (16) mit einer Abdeckung (20) für die Rückenlehne und die Polsterrahmen (16, 18), die lösbar und gesichert mit dem Sitz (2) verbindbar ausgebildet sind, so dass die Polsterung der Sitzflächen und die Polsterung (12, 14) der Rückenlehnen zwischen den Rahmen (16, 18), den Abdeckungen (20) und den Sitz (2) fixiert sind, und wobei die Rahmen (16, 18) als Flachrahmen ausgebildet sind, die vollständig von den Polstern (12, 14) umschlossen sind.

2. Eine Sitzanordnung für ein Fahrzeug nach Anspruch 1, wobei die widerstandsfähigen Polsterungen (12, 14) unter leichter Pressung zwischen der Abdeckung (20) und der Sitzbasis (2) gehalten ist.

3. Eine Sitzanordnung für Fahrzeug nach Anspruch 1 oder Anspruch 2, wobei die Abdeckung (20) an jedem Rahmen (16, 18) entlang der äußeren Kante fest verbunden und gesichert ausgebildet ist.

4. Eine Sitzanordnung für ein Fahrzeug, nach einem der vorhergehenden Ansprüche, wobei an jedem Rahmen (16, 18) lösbare Befestigungselemente vorgesehen sind, die so angeordnet sind, dass diese in Wirkverbindung mit den an der Sitzbasis (2) angeordneten korrespondierenden Gegenstücken bringbar sind.

5. Eine Sitzanordnung nach Anspruch 4, wobei die lösbaren Befestigungselemente an den Rahmen (16, 18) einen Vorsprung (40) aufweisen, sowie eine widerstandsfähige Spitze (42), deren Vorsprung in eine der Sitzbasis (2) zugeordneten, korrespondierenden Öffnung (24) bringbar ist.

6. Eine Sitzanordnung für ein Fahrzeug nach einem der Ansprüche 4 oder 5, wobei die Anordnung der lösbaren Befestigungselemente in der Gebrauchsstellung durch die Abdeckung (20) und den widerstandsfähigen Polsterungen (12, 14) blick- und zugriffsicher ausgebildet sind.

7. Eine Sitzanordnung für ein Fahrzeug nach einem der vorhergehenden Ansprüche, wobei für jeden Rahmen (16, 18) des Weiteren eine Arretierung vorgesehen ist, die den Rahmen (16, 18) relative zu der Sitzbasis (2) hält.

8. Eine Sitzanordnung für ein Fahrzeug nach Anspruch 7, wobei die Arretierung einen Schlitz (34) am Rahmen (16, 18) umfasst, in dem eine der Sitzbasis (2) zugeordnete, hakenförmige Haltenase einführbar ist.

9. Eine Sitzanordnung nach Anspruch 7 oder Anspruch 8, wobei die Arretierung in der Gebrauchsstellung durch die Abdeckung (20) und die widerstandsfähigen Polsterungen (12, 14) blick- und zugriffsicher ausgebildet ist.

## Revendications

1. Dispositif d'assise pour véhicule comprenant un support de siège (2) comportant un siège individuel (6) et un dossier (8), une garniture résiliente de coussin d'assise (12) et une garniture résiliente de coussin de dossier de siège (14), une armature de coussin (18) présentant un revêtement (20) et une armature de coussin de siège (16) présentant un revêtement (20), les armatures (16, 18) pouvant être fixées de manière amovible au support de siège (2) afin de maintenir les garnitures de coussin d'assise et de coussin de dossier de siège (12, 14) entre les armatures (16, 18), les revêtements d'armature (20) et le support de siège (2), et dans lequel les armatures (16, 18) sont sous la forme d'arceaux qui entourent entièrement les garnitures (12, 14).

2. Dispositif d'assise pour véhicule selon la revendication 1, dans lequel les garnitures résilientes (12, 14) sont maintenues légèrement comprimées entre le revêtement (20) et le support de siège (2).

3. Dispositif d'assise pour véhicule selon la revendication 1 ou la revendication 2, dans lequel le revêtement (20) est solidarisé à la bordure périphérique de chaque armature (16, 18).

4. Dispositif d'assise pour véhicule selon l'une quelconque des revendications précédentes, dans lequel chaque armature (16, 18) est pourvue d'une partie d'un dispositif de fixation libérable qui coopère avec une partie complémentaire reliée au support de siège (2).

5. Dispositif d'assise pour véhicule selon la revendication 4, dans lequel le dispositif de fixation libérable comporte une saillie (40) de l'armature (16, 18) présentant un téton élastique (42), laquelle saillie peut être reçue dans une ouverture correspondante (24) du support de siège (2).

6. Dispositif d'assise pour véhicule selon la revendication 4 ou la revendication 5, dans lequel le revêtement d'armature (20) et la garniture résiliente (12, 14) masquent le dispositif de fixation libérable lorsqu'il est utilisé et en empêchent l'accès.

7. Dispositif d'assise pour véhicule selon l'une quelconque des revendications précédentes, dans lequel chaque armature (16, 18) est en plus pourvue d'un dispositif de positionnement pour positionner l'armature (16, 18) par rapport au support de siège (2).

8. Dispositif d'assise pour véhicule selon la revendication 7, dans lequel le dispositif de positionnement présente une fente (34) de l'armature (16, 18) dans laquelle peut être reçue une saillie en crochet (36) du support de siège (2).

9. Dispositif d'assise pour véhicule selon la revendication 7 ou la revendication 8, dans lequel le revêtement d'armature (20) et la garniture résiliente (12, 14) masquent le dispositif de fixation libérable lorsqu'il est utilisé et en empêchent l'accès.
